# EUROPÄISCHE PATENTSCHRIFT

(11) **EP 4 536 590 B1**
(45) Veröffentlichungstag und Bekanntmachung des Hinweises auf die Patenterteilung: **18.03.2026**
(21) Anmeldenummer: 23732007.2
(22) Anmeldetag: 06.06.2023
(51) Int. Cl.: C01C 3/10

(54) **ANLAGE UND VERFAHREN ZUM HERSTELLEN EINES ALKALIMETALLHYDROXID ENTHALTENDEN ALKALIMETALLCYANID-FESTSTOFFPRODUKTES**
PLANT AND PROCESS FOR PRODUCING A SOLID-STATE ALKALI METAL CYANIDE PRODUCT CONTAINING ALKALI METAL HYDROXIDE
INSTALLATION ET PROCÉDÉ DE PRODUCTION D'UN PRODUIT DE CYANURE DE MÉTAL ALCALIN À L'ÉTAT SOLIDE CONTENANT DE L'HYDROXYDE DE MÉTAL ALCALIN

(30) Priorität: 10.06.2022 DE 102022002086
(43) Veröffentlichungstag der Anmeldung: 16.04.2025
(73) Patentinhaber: CyPlus GmbH, 64295 Darmstadt (DE)
(72) Erfinder: JAFELD, Markus, 50226 Frechen (DE); STRUFFERT, Ralf, 51143 Köln (DE)
(74) Vertreter: Röhm Patent Association
(86) Internationale Anmeldenummer: PCT/EP2023/065087
(87) Internationale Veröffentlichungsnummer: WO 2023/237537

(56) Entgegenhaltungen:
- DE-B- 1 064 934
- DE-B- 1 235 873
- GB-A- 858 844
- US-A- 4 847 062

## Beschreibung

Die vorliegende Erfindung betrifft eine Anlage und ein Verfahren zum Herstellen eines Alkalimetallhydroxid enthaltenden Alkalimetallcyanid-Feststoffproduktes.

Der Begriff "Feststoffprodukt" bedeutet im vorliegenden Fall, dass mindestens 50 Gew.-% des Feststoffproduktes auf Feststoff entfallen. Das Feststoffprodukt kann außer einer Festphase auch eine Flüssigphase enthalten.

Kommt Alkalimetallcyanid mit einer Säure in Kontakt, findet ein Zerfall von Alkalimetallcyanid statt, bei welchem Cyanwasserstoff freigesetzt wird. Ein Kontakt mit leicht kohlensaurem Wasser, das beispielsweise entstehen kann, wenn sich Kohlenstoffdioxid aus der Umgebungsluft in Wasser löst, reicht bereits aus.

Um einer ungewollten Freisetzung von Cyanwasserstoff bei Lagerung, Handhabung und Einsatz von Alkalimetallcyanid entgegenzuwirken, enthalten Alkalimetallcyanid-Produkte etwas Alkalimetallhydroxid. Das Alkalimetallhydroxid neutralisiert die Säure, z. B. kohlensaures Wasser, und verhindert so den Zerfall von Alkalimetallcyanid. Andererseits ist ein zu hoher Anteil an Alkalimetallhydroxid wegen seiner hygroskopischen Wirkung problematisch, insbesondere für eher trockene Alkalimetallcyanid-Feststoffprodukte, die durch aus der Luft aufgenommenes Wasser verklumpen können.

Zum Herstellen von Alkalimetallhydroxid enthaltenden Alkalimetallcyanid-Feststoffprodukten können Anlagen mit einem Kristallisationsbehälter eingesetzt werden, in welchen wässrig gelöstes Alkalimetallhydroxid nachgeführt wird, das bei der Bildung von wässrig gelöstem Alkalimetallcyanid verbraucht worden ist. Bei diesen Anlagen kann es zu einem unruhigen Verhalten mit einem deutlich hörbaren Schlagen und Stampfen kommen.

Eine derartige Anlage ist aus der GB 858,844 A bekannt. Die Anlage weist einen evaporativen Kristallisator auf, welcher einen unter Unterdruck stehenden Kristallisationsbehälter mit einem Suspensionssammelraum hat. In dem Suspensionssammelraum befindet sich eine erste Suspension, welche eine Flüssigphase mit wässrig gelöstem Natriumcyanid und wässrig gelöstem Natriumhydroxid enthält sowie eine Festphase mit Natriumcyanidkristallen. Durch eine Suspensionsentnahmeleitung wird erste Suspension aus dem Suspensionssammelraum in einen Rotationsfilter geleitet, mit welchem Natriumcyanidkristalle aus der ersten Suspension herausgefiltert werden. In diesem Zuge wird die erste Suspension in ein Natriumcyanid-Feststoffprodukt und eine zweite Suspension getrennt, welche einen geringeren Gewichtsanteil an Natriumcyanidkristallen hat als die erste Suspension. Die zweite Suspension wird in den Suspensionssammelraum des Kristallisationsbehälters geleitet.

Stromauf des Rotationsfilters zweigt von der Suspensionsentnahmeleitung eine Reaktionsschleife ab, in welcher der ersten Suspension ein Eduktgas zugegeben wird, welches im Wesentlichen reiner gasförmiger Cyanwasserstoff ist. Es entsteht ein Reaktionsgemisch mit einer dritten Suspension, welche im Vergleich zur der ersten Suspension einen höheren Anteil an wässrig gelöstem Natriumcyanid und einen niedrigeren Anteil an wässrig gelöstem Natriumhydroxid enthält. Das Reaktionsgemisch wird in den Suspensionssammelraum des Kristallisationsbehälters geleitet.

Vom Suspensionssammelraum steigen Brüden auf. Soweit das Reaktionsgemisch eine Gasphase enthält, trennt sich dies ab und reichert die Brüden an.

Die Brüden durchlaufen eine Gaswäsche. In einem oberen Abschnitt des Kristallisationsbehälters ist ein Siebboden vorgesehen, welcher mit einer wässrigen Natriumhydroxidlösung beschickt wird und von welchem Natriumhydroxidlösung herunterregnet. Diesem Regen begegnen die zum Siebboden aufsteigenden Brüden. Die Brüden müssen außerdem den Siebboden durchströmen. Soweit die Brüden Cyanwasserstoff enthalten, bildet sich durch den Kontakt mit der Natriumhydroxidlösung weiteres wässrig gelöstes Natriumcyanid. Mit dem verbleibenden Natriumhydroxid des Regens wird in der Reaktionsschleife umgesetztes Natriumhydroxid nachgeführt.

In der GB 858,844 A wird ausgeführt, dass eine Natriumhydroxidkonzentration der im Suspensionssammelraum befindlichen Mutterlauge von mehr als etwa 4 % einerseits zu einem ernsthaften Poltern und Stampfen sowie zu starken Vibrationen im Zirkulationssystem führe und andererseits zu einem unerwünschten Produkt, das einen zu hohen Gehalt an Natriumhydroxid habe. Daher wird vorgeschlagen, die Natriumhydroxidkonzentration der im Suspensionssammelraum befindlichen Mutterlauge in einem Bereich von 0,2 bis 3 % zu halten, vorzugsweise unterhalb von 1 %.

In der DE 1064934 A wird beschrieben, dass bei der Verwendung starker Alkalilauge die Umsetzung mit Cyanwasserstoff sehr heftig einsetzen könne. Beim Eintreten des Cyanwasserstoffs in die Alkalilauge könnten Stöße infolge einer Erwärmung des Reaktionsgemisches durch freiwerdende Reaktionswärme auftreten. Um dieses Problem zu lösen, wird vorgeschlagen, eine bereits Alkalicyanid enthaltende Alkalilauge zu verwenden und die im Reaktionsgefäß befindliche Flüssigkeit in so starke Rotation zu versetzen, dass sich ein deutlicher Wirbel ausbildet.

Auch aus einer Suspension mit einer vergleichsweise geringen Alkalimetallhydroxidkonzentration lässt sich ein vergleichsweise trockenes ein Alkalimetallcyanid-Feststoffprodukt mit einer vergleichsweise hohen Alkalimetallhydroxidkonzentration herstellen. Hierfür muss jedoch bei der Fest-Flüssig-Trennung entsprechend mehr Restfeuchte im - anschließend noch weiter zu trocknenden - Feststoffprodukt verbleiben. Eine höhere Restfeuchte hat jedoch einige Nachteile. So ist mehr Energie für das weitere Trocknen erforderlich als wenn mit geringerer Restfeuchte abgetrennt worden wäre. Je intensiver der Trocknungsprozess ist, desto mehr wird ein Zerfall von Alkalimetallcyanid unter Bildung unerwünschten Alkalimetallformiats und Ammoniaks begünstigt. Eine höhere Restfeuchte geht zudem mit einer höheren Verbackungsneigung einher. In einer Herstellanlage können Verbackungen und Anbackungen zu Problemen führen, insbesondere zu Verstopfungen und zu einer schlechterer Wärmeübertragung an Heiz- und Kühlflächen.

Die US 4,847,062 A offenbart in ihrer Figur 3 eine Anlage und ein Verfahren zum Herstellen eines Natriumcyanid-Feststoffproduktes. Die Anlage weist einen Behälter auf, in welchem Absorption und Kristallisation stattfinden und in welchem eine erste Suspension hergestellt wird. Die erste Suspension enthält eine Flüssigphase mit wässrig gelöstem Natriumcyanid und wässrig gelöstem Natriumhydroxid sowie eine Festphase mit Natriumcyanidkristallen. Durch eine Suspensionsentnahmeleitung wird dem Behälter erste Suspension entnommen. Ein Teil davon wird in eine Rückführschleife geleitet. Der Rest wird in eine Fest-Flüssig-Trenneinrichtung geleitet, in welcher die eingeleitete erste Suspension in ein Natriumcyanid-Feststoffprodukt und eine zweite Suspension getrennt wird. Die zweite Suspension hat einen geringeren Gewichtsanteil an Natriumcyanidkristallen als die erste Suspension. Die zweite Suspension wird in die Rückführschleife geleitet und mit der ersten Suspension gemischt, wodurch eine dritte Suspension entsteht. Der dritten Suspension wird eine Natriumhydroxidlösung zugemischt, wodurch eine vierte Suspension entsteht. Die vierte Suspension wird oben in den Behälter eingeleitet. Unten wird in den Behälter ein cyanwasserstoffhaltiges Synthesegas eingeleitet.

In der DE 1235873 A wird eine Anlage zum Herstellen eines Alkalimetallcyanid-Feststoffes beschrieben, welche eine Vorlage mit einer ersten Suspension aufweist. Die erste Suspension hat eine Flüssigphase mit wässrig gelöstem Alkalimetallcyanid und wässrig gelöstem Alkalimetallhydroxid sowie eine Festphase mit Alkalimetallcyanidkristallen. Aus der Vorlage wird erste Suspension entnommen und in ein Filtersystem geleitet, in welchem Alkalimetallcyanidkristalle abgetrennt werden. Dabei entsteht eine zweite Suspension mit einem im Vergleich zur ersten Suspension geringeren Gewichtsanteil an Alkalimetallcyanidkristallen. Der zweiten Suspension wird eine Alkalimetallhydroxidlösung zugegeben, wodurch eine dritte Suspension entsteht. Die dritte Suspension wird in ein Absorptionsrohr geleitet, an dessen Innenwandung sie herunterläuft. Gleichzeitig wird in das Absorptionsrohr ein cyanwasserstoffhaltiges Gasgemisch eingeleitet. Am unteren Ende des Absorptionsrohres liegen eine vierte Suspension und ein Reaktionsgasgemisch vor, welche in die Vorlage strömen. Das Reaktionsgasgemisch füllt einen oberen Bereich der Vorlage und strömt aus diesem durch eine Leitung heraus.

Die US 3,079,239 A offenbart eine Anlage und ein Verfahren zum batchweisen Herstellen einer wässrigen Natriumcyanidlösung. Die Anlage weist einen Reaktionsbehälter auf, in welchem eine erste Natriumcyanidlösung, die wässrig gelöstes Natriumcyanid und wässrig gelöstes Natriumhydroxid enthält, hergestellt wird. Dabei werden eine wässrige Natriumhydroxidlösung und flüssiger Cyanwasserstoff in den Behälter eingeleitet. Die Zufuhr von flüssigem Cyanwasserstoff wird in Abhängigkeit des Natriumhydroxidgewichtsanteiles der ersten Natriumcyanidlösung geregelt. Um den Natriumhydroxidgewichtsanteil der ersten Natriumcyanidlösung zu bestimmen, wird erste Natriumcyanidlösung aus dem Reaktionsbehälter in eine Messschleife geleitet, wo ihr zur Verdünnung reines Wasser zugemischt wird, wodurch eine zweite Natriumcyanidlösung entsteht. Die zweite Natriumcyanidlösung wird in eine Messeinheit geleitet, welche die elektrische Leitfähigkeit der zweiten Natriumcyanidlösung misst. Daraus wird der Natriumhydroxidgewichtsanteil der ersten Natriumcyanidlösung geschlussfolgert. Die zweite Natriumcyanidlösung wird in den Reaktionsbehälter eingeleitet.

Der vorliegenden Erfindung liegt die Aufgabe zugrunde, eine Anlage mit einem Kristallisationsbehälter anzugeben, mit welcher ein Alkalimetallcyanid-Feststoffprodukt hergestellt werden kann, das einen guten Gewichtsanteil an Alkalimetallhydroxid hat, wobei es in der Anlage möglichst ruhig bleibt.

Die Aufgabe wird erfindungsgemäß gelöst mit einer Anlage mit den Merkmalen des Anspruches 1. Bei der erfindungsgemäßen Anlage ist die Laugenzumischeinrichtung dem Kristallisationsbehälter nach- und der Fest-Flüssig-Trenneinrichtung vorgeschaltet. Mit der Laugenzumischeinrichtung kann der ersten Suspension die wässrig gelöstes Alkalimetallhydroxid enthaltende Eduktflüssigkeit zugemischt werden. Dadurch kann der Fest-Flüssig-Trenneinrichtung eine Suspension (zweite Suspension) zugeführt werden, deren Flüssigphase einen höheren Alkalimetallhydroxidgewichtsanteil hat als die Flüssigphase der im Suspensionssammelraum des Kristallisationsbehälters befindlichen Suspension (erste Suspension). Auf diese Weise kann ein Alkalimetallcyanid-Feststoffprodukt erhalten werden, das zugunsten einer höheren Sicherheit gegen ungewollte Freisetzung von Cyanwasserstoff einen höheren Alkalimetallhydroxidgewichtsanteil hat als ein Alkalimetallcyanid-Feststoffprodukt, das ansonsten durch Fest-Flüssig-Trennung der im Suspensionssammelraum des Kristallisationsbehälters befindlichen Suspension (erste Suspension) erhalten werden würde. Gleichzeitig kann der Alkalimetallhydroxidgewichtsanteil der Flüssigphase der im Suspensionssammelraum des Kristallisationsbehälters befindlichen Suspension (erste Suspension) zugunsten eines ruhigeren Geschehens in der Anlage niedriger gewählt werden, als es möglich wäre, wenn bereits die im Suspensionssammelraum des Kristallisationsbehälters befindliche Suspension (erste Suspension) den gesamten für das gewünschte Alkalimetallcyanid-Feststoffprodukt mit höherer Sicherheit gegen ungewollte Freisetzung von Cyanwasserstoff erforderlichen Gehalt an Alkalimetallhydroxid haben müsste.

Vorzugsweise kann in dem Kristallisationsbehälter Wasser der Flüssigphase der ersten Suspension verdampft werden. Dies fördert das Entstehen und das Wachstum von Alkalimetallcyanidkristallen.

Vorteilhafterweise kann die zweite Trenneinrichtungsabführleitung die Fest-Flüssig-Trenneinrichtung und den Kristallisationsbehälter der Suspensionsherstelleinrichtung fluidisch miteinander verbinden und durch die zweite Trenneinrichtungsabführleitung dritte Suspension aus der Fest-Flüssig-Trenneinrichtung abgeführt und in den Kristallisationsbehälter geleitet werden. So kann dritte Suspension zum Herstellen weiteren Alkalimetallcyanid-Feststoffprodukts genutzt werden. In diesem Zuge kann mit der dritten Suspension auch Alkalimetallhydroxid in den Kristallisationsbehälter nachgeführt werden, welches bei der Bildung von Alkalimetallcyanid verbraucht worden ist. Dabei gelangt mit der dritten Suspension weniger Alkalimetallhydroxid in den Kristallisationsbehälter als wenn die wässrig gelöstes Alkalimetallhydroxid enthaltende Eduktflüssigkeit - anstatt in der Laugenzumischeinrichtung der ersten Suspension zugegeben zu werden - direkt in den Kristallisationsbehälter eingeleitet werden würde. Denn weil die Flüssigphase der zweiten Suspension einen höheren Gewichtsanteil an Alkalimetallhydroxid hat als die Flüssigphase der ersten Suspension, gelangt mehr Alkalimetallhydroxid in das Alkalimetallcyanid-Feststoffprodukt. Dieses Mehr an Alkalimetallhydroxid kann folglich nicht mehr in den Kristallisationsbehälter gelangen.

Günstigerweise kann die zweite Trenneinrichtungsabführleitung eine Druckabfallbegrenzungseinrichtung aufweisen, welche von dritter Suspension durchströmbar ist und mit welcher ein Betriebsdruckunterschied zwischen der Fest-Flüssig-Trenneinrichtung und dem Kristallisationsbehälter der Suspensionsherstelleinrichtung aufrechterhalten werden kann, während die Druckabfallbegrenzungseinrichtung von dritter Suspension durchströmt wird. So kann das Strömen von dritter Suspension aus der Fest-Flüssig-Trenneinrichtung in den Kristallisationsbehälter druckneutral für den Betriebsdruck im Kristallisationsbehälter erfolgen.

Vorteilhafterweise kann eine Reaktionsschleife zum Herstellen einer vierten Suspension, welche eine Flüssigphase mit wässrig gelöstem Alkalimetallcyanid und wässrig gelöstem Alkalimetallhydroxid enthält sowie eine Festphase mit Alkalimetallcyanidkristallen, vorgesehen sein, wobei
- erste Suspension in die Reaktionsschleife eingeleitet werden kann,
- die Reaktionsschleife eine Cyanwasserstoffzumischeinrichtung aufweist, mit welcher durch Zumischen einer flüssigen Cyanwasserstoff enthaltenden Eduktflüssigkeit zur ersten Suspension die vierte Suspension, welche im Vergleich zur ersten Suspension einen geringeren Gewichtsanteil an wässrig gelöstem Alkalimetallhydroxid und einen höheren Gewichtsanteil an Alkalimetallcyanid hat, hergestellt werden kann, und
- vierte Suspension in den Kristallisationsbehälter eingeleitet werden kann.

Dadurch kann die Bildung von Alkalimetallcyanid außerhalb des Kristallisationsbehälters erfolgen, was zusätzlich zu ruhigen Prozessen beiträgt.

Vorzugsweise kann
- die Reaktionsschleife fluidisch mit der Suspensionsentnahmeleitung verbunden sein, wobei erste Suspension aus der Suspensionsentnahmeleitung abgeführt und in die Reaktionsschleife geleitet werden kann, und
- die Reaktionsschleife fluidisch mit dem Kristallisationsbehälter verbunden sein und vierte Suspension aus der Reaktionsschleife in den Kristallisationsbehälter geleitet werden.

Auf diese Weise kann die Reaktionsschleife aus der Suspensionsentnahmeleitung gespeist werden und der Suspensionssammelraum braucht nur mit einem Ausgang zum Abführen von erster Suspension versehen werden anstatt mit zweien.

Besonders bevorzugt kann eine Laugenzuführleitung vorgesehen sein, welche mit dem Kristallisationsbehälter fluidisch verbunden ist und durch welche eine wässrig gelöstes Alkalimetallhydroxid enthaltenden Eduktflüssigkeit in den Kristallisationsbehälter geleitet werden kann. So steht eine weitere Möglichkeit zur Verfügung, wässrig gelöstes Alkalimetallhydroxid in den Kristallisationsbehälter einzuleiten, insbesondere, um bei der Bildung von Alkalimetallcyanid verbrauchtes Alkalimetallhydroxid nachzuführen. Außerdem kann auf diese Weise die Menge an Alkalimetallhydroxid kleiner gewählt werden, welche mit der Laugenzumischeinrichtung der ersten Suspension zugegeben wird.

Besonders vorteilhaft kann die Laugenzumischeinrichtung fluidisch mit der Laugenzuführleitung verbunden sein und wässrig gelöstes Alkalimetallhydroxid enthaltende Eduktflüssigkeit aus der Laugenzuführleitung in die Laugenzumischeinrichtung geleitet werden. So können sowohl die Laugenzumischeinrichtung als auch der Kristallisationsbehälter aus einer Quelle mit wässrig gelöstes Alkalimetallhydroxid enthaltender Eduktflüssigkeit gespeist werden.

Der vorliegenden Erfindung liegt ferner die Aufgabe zugrunde, ein Verfahren anzugeben, mit welchem ein Alkalimetallcyanid-Feststoffprodukt hergestellt werden kann, das einen guten Gewichtsanteil an Alkalimetallhydroxid hat, wobei es in einer dabei verwendeten Anlage möglichst ruhig bleibt.

Diese Aufgabe wird erfindungsgemäß gelöst mit einem Verfahren mit den Merkmalen des Anspruches 9. Dadurch, dass die erste Suspension mit der wässrig gelöstes Alkalimetallhydroxid enthaltenden Eduktflüssigkeit gemischt wird, kann der Fest-Flüssig-Trenneinrichtung eine Suspension (zweite Suspension) zugeführt werden, deren Flüssigphase einen höheren Alkalimetallhydroxidgewichtsanteil hat als die Flüssigphase der im Suspensionssammelraum des Kristallisationsbehälters befindlichen Suspension (erste Suspension). Auf diese Weise kann ein Alkalimetallcyanid-Feststoffprodukt erhalten werden, das zugunsten einer höheren Sicherheit gegen ungewollte Freisetzung von Cyanwasserstoff einen höheren Alkalimetallhydroxidgewichtsanteil hat als ein Alkalimetallcyanid-Feststoffprodukt, das ansonsten durch Fest-Flüssig-Trennung der im Suspensionssammelraum des Kristallisationsbehälters befindlichen Suspension (erste Suspension) erhalten werden würde. Gleichzeitig kann der Alkalimetallhydroxidgewichtsanteil der Flüssigphase der im Suspensionssammelraum des Kristallisationsbehälters befindlichen Suspension (erste Suspension) zugunsten eines ruhigeren Geschehens in der Anlage niedriger gewählt werden, als es möglich wäre, wenn bereits die im Suspensionssammelraum des Kristallisationsbehälters befindliche Suspension (erste Suspension) den gesamten für das gewünschte Alkalimetallcyanid-Feststoffprodukt mit höherer Sicherheit gegen ungewollte Freisetzung von Cyanwasserstoff erforderlichen Gehalt an Alkalimetallhydroxid haben müsste.

Bevorzugterweise kann dritte Suspension aus der Fest-Flüssig-Trenneinrichtung in den Kristallisationsbehälter der Suspensionsherstelleinrichtung geleitet werden. Dadurch kann dritte Suspension zum Herstellen weiteren Alkalimetallcyanid-Feststoffprodukts genutzt werden. In diesem Zuge kann mit der dritten Suspension auch Alkalimetallhydroxid in den Kristallisationsbehälter nachgeführt werden, welches bei der Bildung von wässrig gelöstem Alkalimetallcyanid verbraucht worden ist. Dabei gelangt mit der dritten Suspension weniger Alkalimetallhydroxid in den Kristallisationsbehälter als wenn die wässrig gelöstes Alkalimetallhydroxid enthaltende Eduktflüssigkeit - anstatt in der Laugenzumischeinrichtung der ersten Suspension zugegeben zu werden - direkt in den Kristallisationsbehälter eingeleitet werden würde. Denn weil die Flüssigphase der zweiten Suspension einen höheren Gewichtsanteil an Alkalimetallhydroxid hat als die Flüssigphase der ersten Suspension, gelangt mehr Alkalimetallhydroxid in das Alkalimetallcyanid-Feststoffprodukt. Dieses Mehr an Alkalimetallhydroxid kann folglich nicht mehr in den Kristallisationsbehälter gelangen.

Vorteilhafterweise kann ein Betriebsdruckunterschied zwischen der Fest-Flüssig-Trenneinrichtung und dem Kristallisationsbehälter aufrechterhalten werden, währen dritte Suspension aus der Fest-Flüssig-Trenneinrichtung in den Kristallisationsbehälter geleitet wird. Auf diese Weise kann dritte Suspension für den Betriebsdruck im Kristallisationsbehälter druckneutral aus der Fest-Flüssig-Trenneinrichtung in den Kristallisationsbehälter strömen.

Besonders bevorzugt kann
- erste Suspension in eine Reaktionsschleife geleitet werden,
- in der Reaktionsschliefe durch Zumischen einer flüssigen Cyanwasserstoff enthaltenden Eduktflüssigkeit zur ersten Suspension eine vierte Suspension hergestellt werden, welche eine Flüssigphase mit wässrig gelöstem Alkalimetallcyanid und wässrig gelöstem Alkalimetallhydroxid enthält sowie eine Festphase mit Alkalimetallcyanidkristallen, wobei die vierte Suspension im Vergleich zur ersten Suspension einen geringeren Gewichtsanteil an wässrig gelöstem Alkalimetallhydroxid und einen höheren Gewichtsanteil an Alkalimetallcyanid hat, und
- die vierte Suspension in den Kristallisationsbehälter geleitet werden.

Hierdurch kann die Bildung von wässrig gelöstem Alkalimetallcyanid außerhalb des Kristallisationsbehälters erfolgen, was zusätzlich zu ruhigen Prozessen beiträgt.

Vorzugsweise kann durch eine Laugenzuführleitung eine wässrig gelöstes Alkalimetallhydroxid enthaltende Eduktflüssigkeit in den Kristallisationsbehälter geleitet werden. Damit steht eine weitere Möglichkeit zur Verfügung, wässrig gelöstes Alkalimetallhydroxid in den Kristallisationsbehälter einzuleiten, insbesondere, um bei der Bildung von Alkalimetallcyanid verbrauchtes Alkalimetallhydroxid nachzuführen. Außerdem kann auf diese Weise die Menge an Alkalimetallhydroxid kleiner gewählt werden, welche zum Bilden der zweiten Suspension der ersten Suspension zugegeben wird.

Besonders günstig kann wässrig gelöstes Alkalimetallhydroxid enthaltende Eduktflüssigkeit aus der Laugenzuführleitung abgeführt und in Schritt (c) der ersten Suspension zugemischt werden.

Auf diese Weise kann sowohl die in Schritt (c) eingesetzte Eduktflüssigkeit als auch die Eduktflüssigkeit, die (direkt) in den Kristallisationsbehälter geleitet wird, aus einer Quelle zugeführt werden.

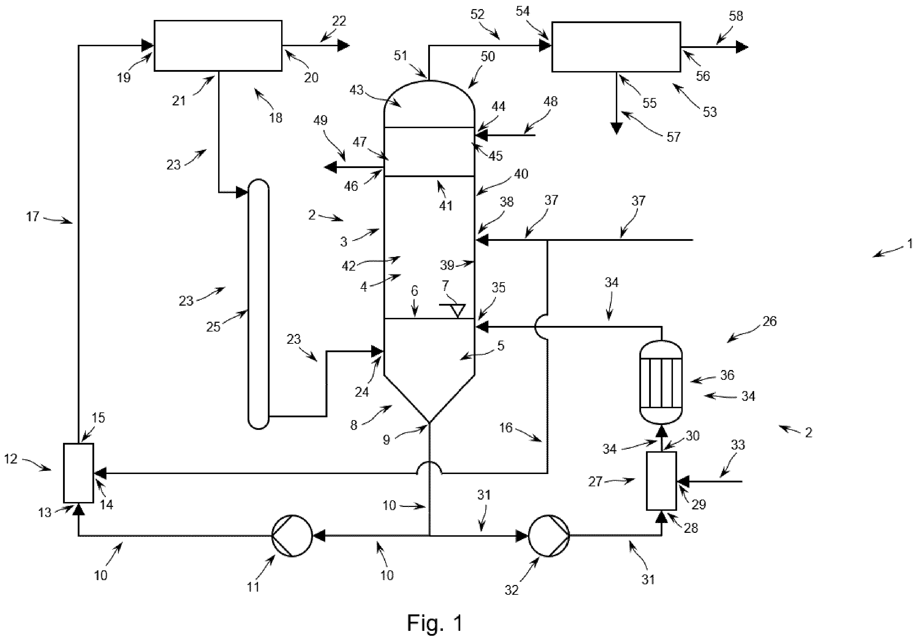

In Figur 1 ist eine Ausführungsform der Erfindung anhand eines schematischen Fließschemas dargestellt und wird nachfolgend beschrieben.

Figur 1 veranschaulicht anhand eines schematischen Fließschemas eine Anlage 1 zum Herstellen eines Alkalimetallhydroxid enthaltenden Alkalimetallcyanid-Feststoffproduktes. Die Anlage 1 weist eine Suspensionsherstelleinrichtung 2 mit einem Kristallisationsbehälter 3 auf, in dessen Inneren 4 ein Suspensionssammelraum 5 zum Sammeln von Suspension vorgesehen ist. Im Suspensionssammelraum 5 befindet sich eine erste Suspension, welche eine Flüssigphase mit wässrig gelöstem Alkalimetallhydroxid und wässrig gelöstem Alkalimetallcyanid enthält sowie eine Festphase mit Alkalimetallcyanidkristallen. Die erste Suspension hat eine Oberfläche 6, welche in Figur 1 auch durch ein Oberflächensymbol 7 kenntlich gemacht ist.

Im Bereich eines unteren Endes 8 des Kristallisationsbehälters 3 hat der Kristallisationsbehälter 3 einen ersten Ausgang 9, an welchen eine Suspensionsentnahmeleitung 10 fluidisch angeschlossen ist. Durch die Suspensionsentnahmeleitung 10 kann erste Suspension aus dem Suspensionssammelraum 5 abgeführt werden. Die Suspensionsentnahmeleitung 10 weist eine erste Pumpe 11 auf.

Die Anlage 1 weist eine Laugenzumischeinrichtung 12 auf, mit welcher der ersten Suspension zum Herstellen einer zweiten Suspension, welche eine Flüssigphase mit wässrig gelöstem Alkalimetallcyanid und wässrig gelöstem Alkalimetallhydroxid sowie einer Festphase mit Alkalimetallcyanidkristallen enthält, eine wässrig gelöstes Alkalimetallhydroxid enthaltende Eduktflüssigkeit zugemischt werden kann, deren Alkalimetallhydroxidgewichtsanteil höher ist als der Alkalimetallhydroxidgewichtsanteil der Flüssigphase der ersten Suspension.

Die Laugenzumischeinrichtung 12 hat einen ersten Eingang 13, einen zweiten Eingang 14 und einen Ausgang 15. An den ersten Eingang 13 ist die Suspensionsentnahmeleitung 10 fluidisch angeschlossen. Die Suspensionsentnahmeleitung 10 verbindet also den Suspensionssammelraum 5 des Kristallisationsbehälters 3 und die Laugenzumischeinrichtung 12 fluidisch miteinander. Durch die Suspensionsentnahmeleitung 10 kann erste Suspension aus dem Suspensionssammelraum 5 in die Laugenzumischeinrichtung 12 geleitet werden.

An den zweiten Eingang 14 ist eine erste Laugenzuführleitung 16 fluidisch angeschlossen. Durch die erste Laugenzuführleitung 16 kann die wässrig gelöstes Alkalimetallhydroxid enthaltende Eduktflüssigkeit in die Laugenzumischeinrichtung 12 geleitet werden.

An den Ausgang 15 ist eine Laugenzumischeinrichtungsabführleitung 17 fluidisch angeschlossen. Durch die Laugenzumischeinrichtungsabführleitung 17 kann zweite Suspension aus der Laugenzumischeinrichtung 12 abgeführt werden.

Die Anlage 1 weist eine Fest-Flüssig-Trenneinrichtung 18 auf, mit welcher im Rahmen eines Abtrennens von Festphase der zweiten Suspension die zweite Suspension in ein Alkalimetallcyanid-Feststoffprodukt und eine dritte Suspension getrennt werden kann, wobei die dritte Suspension eine Flüssigphase mit wässrig gelöstem Alkalimetallhydroxid und wässrig gelöstem Alkalimetallcyanid sowie eine Festphase mit Alkalimetallcyanidkristallen enthält. Im Vergleich zur zweiten Suspension ist der Alkalimetallcyanidkristallgewichtsanteil der dritten Suspension geringer.

Die Fest-Flüssig-Trenneinrichtung 18 hat einen Eingang 19, einen ersten Ausgang 20 und einen zweiten Ausgang 21. An den Eingang 19 ist die Laugenzumischeinrichtungsabführleitung 17 fluidisch angeschlossen. Die Laugenzumischeinrichtungsabführleitung 17 verbindet also die Laugenzumischeinrichtung 12 und die Fest-Flüssig-Trenneinrichtung 18 fluidisch miteinander. Durch die Laugenzumischeinrichtungsabführleitung 17 kann zweite Suspension in die Fest-Flüssig-Trenneinrichtung 18 eingeleitet werden.

An den ersten Ausgang 20 ist eine erste Trenneinrichtungsabführleitung 22 fluidisch angeschlossen. Durch die erste Trenneinrichtungsabführleitung 22 kann Alkalimetallcyanid-Feststoffprodukt aus der Fest-Flüssig-Trenneinrichtung 18 abgeführt werden.

An den zweiten Ausgang 21 ist eine zweite Trenneinrichtungsabführleitung 23 fluidisch angeschlossen. Durch die zweite Trenneinrichtungsabführleitung 23 kann dritte Suspension aus der Fest-Flüssig-Trenneinrichtung 18 abgeführt werden.

Die zweite Trenneinrichtungsabführleitung 23 ist fluidisch an einen ersten Eingang 24 des Kristallisationsbehälters 3 angeschlossen. D. h. die zweite Trenneinrichtungsabführleitung 23 verbindet die Fest-Flüssig-Trenneinrichtung 18 und den Kristallisationsbehälter 3 fluidisch miteinander. Durch die zweite Trenneinrichtungsabführleitung 23 kann dritte Suspension aus der Fest-Flüssig-Trenneinrichtung 18 abgeführt und in den Kristallisationsbehälter 3 eingeleitet werden. Der erste Eingang 24 des Kristallisationsbehälters 3 ist an einer Stelle vorgesehen, welche sich unterhalb des Flüssigkeitsspiegels 6 der im Suspensionssammelraum 5 des Kristallisationsbehälters 3 befindlichen ersten Suspension befindet.

Die zweite Trenneinrichtungsabführleitung 23 weist eine von dritter Suspension durchströmbare Druckabfallbegrenzungseinrichtung 25 auf, mit welcher ein Betriebsdruckunterschied zwischen einem Inneren der Fest-Flüssig-Trenneinrichtung 18 und dem Inneren 4 des Kristallisationsbehälters aufrechterhalten werden kann, während dritte Suspension durch die Druckabfallbegrenzungseinrichtung 25 strömt. Das Strömen von dritter Suspension aus der Fest-Flüssig-Trenneinrichtung 18 in den Kristallisationsbehälter 3 kann daher druckneutral für den Betriebsdruck im Kristallisationsbehälter 3 erfolgen.

Vorzugsweise kann die Druckabfallbegrenzungseinrichtung 25 ein Flüssigkeitsschloss aufweisen. Um die Flüssigkeitsschlossfunktion zu realisieren, kann beispielsweise einen U-förmiger Leitungsabschnitt vorgesehen sein, welcher nach dem Prinzip eines Siphons arbeitet. Man könnte ein solches Flüssigkeitsschloss auch als siphonartiges Flüssigkeitsschloss bezeichnen. Diese Art von Druckabfallbegrenzungseinrichtung 25 kann als sogenannter Feed Well ausgebildet sein.

Die Suspensionsherstelleinrichtung 2 weist eine Reaktionsschleife 26 auf, mit welcher eine vierte Suspension hergestellt werden kann, welche eine Flüssigphase mit wässrig gelöstem Alkalimetallhydroxid und wässrig gelöstem Alkalimetallcyanid enthält sowie eine Festphase mit Alkalimetallcyanidkristallen, wobei die vierte Suspension einen geringeren Gewichtsanteil an Alkalimetallhydroxid und einen höheren Gewichtsanteil an Alkalimetallcyanid hat als die erste Suspension.

Die Reaktionsschleife 26 weist eine Cyanwasserstoffzumischeinrichtung 27 auf, mit welcher der ersten Suspension eine flüssigen Cyanwasserstoff enthaltende Eduktflüssigkeit zugemischt werden kann. Die Cyanwasserstoffzumischeinrichtung 27 hat einen ersten Eingang 28, einen zweiten Eingang 29 und einen Ausgang 30. An den ersten Eingang 28 ist eine Reaktionszuführleitung 31 fluidisch angeschlossen. In der vorliegenden Ausführungsform der Erfindung ist die Reaktionszuführleitung 31 außerdem fluidisch mit der Suspensionsentnahmeleitung 10 verbunden. Sie verbindet also die Suspensionsentnahmeleitung 10 fluidisch mit der Cyanwasserstoffzumischeinrichtung 27. Durch die Reaktionszuführleitung 31 kann erste Suspension aus der Suspensionsentnahmeleitung 10 in die Cyanwasserstoffzumischeinrichtung 27 geleitet werden. Die Reaktionszuführleitung 31 weist eine zweite Pumpe 32 auf.

An den zweiten Eingang 29 ist eine Cyanwasserstoffzuführleitung 33 fluidisch angeschlossen. Durch die Cyanwasserstoffzuführleitung 33 kann die flüssigen Cyanwasserstoff enthaltende Eduktflüssigkeit in die Cyanwasserstoffzumischeinrichtung eingeleitet werden.

An den Ausgang 30 der Cyanwasserstoffzumischeinrichtung 27 ist eine Reaktionsabführleitung 34 fluidisch angeschlossen. Durch die Reaktionsabführleitung 34 kann vierte Suspension aus der Cyanwasserstoffzumischeinrichtung 27 abgeführt werden.

Die Reaktionsabführleitung 34 ist außerdem an einen zweiten Eingang 35 des Kristallisationsbehälters 3 fluidisch angeschlossen. Sie verbindet also die Cyanwasserstoffzumischeinrichtung 27 und den Kristallisationsbehälter 3 fluidisch miteinander. Durch die Reaktionsabführleitung 34 kann vierte Suspension in den Kristallisationsbehälter 3 geleitet werden.

Der zweite Eingang 35 des Kristallisationsbehälters 3 ist an einer Stelle unterhalb des Flüssigkeitsspiegels 6 der im Suspensionssammelraum 5 des Kristallisationsbehälters 3 befindlichen ersten Suspension vorgesehen.

Die Reaktionsabführleitung 34 weist einen Wärmetauscher 36 auf, mit welchem der vierten Suspension Wärme zugeführt werden kann.

Die Anlage 1 weist eine zweite Laugenzuführleitung 37 auf, welche fluidisch an einen dritten Eingang 38 des Kristallisationsbehälters 3 angeschlossen ist. Durch die Laugenzuführleitung 37 kann unter Nutzung des dritten Einganges 38 eine wässrig gelöstes Alkalimetallhydroxid enthaltende Eduktflüssigkeit in den Kristallisationsbehälter 3 eingeleitet werden. Der dritte Eingang 38 ist an einer Stelle oberhalb des Flüssigkeitsspiegels 6 der im Suspensionssammelraum 5 des Kristallisationsbehälters 3 befindlichen ersten Suspension vorgesehen. Mit Hilfe einer in Figur 1 nicht gezeigten Verteileinrichtung wird die Eduktflüssigkeit über einen Umfangsbereich des Kristallisationsbehälters 3 verteilt an eine Innenseite 39 einer Wandung 40 des Kristallisationsbehälters 3 geleitet und läuft dann an der Innenseite 39 herunter. Dort, wo die Eduktflüssigkeit an der Innenseite 39 herunterläuft, wirkt sie Alkalimetallcyanidablagerungen an der Innenseite 39 entgegen.

In der vorliegenden Ausführungsform der Erfindung ist die erste Laugenzuführleitung 16 fluidisch mit der zweiten Laugenzuführleitung 37 verbunden und wird von dieser mit der wässrig gelöstes Alkalimetallhydroxid enthaltenden Eduktflüssigkeit gespeist.

Oberhalb der Verteileinrichtung ist im Innern 4 des Kristallisationsbehälters 3 ein Gaswaschmodul 41 vorgesehen. Der Raum zwischen Suspensionssammelraum 5 und Gaswaschmodul 41 ist ein erster Gasraum 42 und der Raum oberhalb des Gaswaschmodules 41 ist ein zweiter Gasraum 43. Mit dem Gaswaschmodul 41 kann Cyanwasserstoff, welcher in durch den ersten Gasraum 42 nach oben aufsteigenden Brüden enthalten ist, ausgewaschen werden. So kann eine Gaswäsche stattfinden.

Der Kristallisationsbehälter 3 weist zum Speisen des Gaswaschmodules 41 mit einer wässrig gelöstes Alkalimetallhydroxid enthaltenden Gaswaschflüssigkeit einen vierten Eingang 44 auf, welcher auf Höhe eines oberen Bereiches 45 des Gaswaschmoduls 41 vorgesehen ist, und zum Abführen von Gaswaschflüssigkeit aus dem Gaswaschmodul 41 einen zweiten Ausgang 46, welcher auf Höhe eines unteren Bereiches 47 des Gaswaschmoduls 41 vorgesehen ist. An den vierten Eingang 44 ist eine Waschmodulzuführleitung 48 zum Zuführen von Gaswaschflüssigkeit fluidisch angeschlossen und an den zweiten Ausgang 46 ist eine Waschmodulabführleitung 49 zum Abführen von Gaswaschflüssigkeit fluidisch angeschlossen.

Die abgeführte Gaswaschflüssigkeit bleibt von den Suspensionen und dem Feststoffprodukt separiert. Sie fließt also weder in eine der ersten bis vierten Suspensionen noch in das Feststoffprodukt ein.

Im Bereich eines oberen Endes 50 des Kristallisationsbehälters 3 ist ein dritter Ausgang 51 vorgesehen, an welchen eine Brüdenentnahmeleitung 52 fluidisch angeschlossen ist. Durch die Brüdenentnahmeleitung 52 können Brüden, welche das Gaswaschmodul 41 passiert haben, aus dem zweiten Gasraum 43 des Kristallisationsbehälters 3 abgeführt werden.

Die Anlage 1 weist eine Vakuumeinheit 53 mit einen Eingang 54, einen ersten Ausgang 55 und einen zweiten Ausgang 56 auf. Die Brüdenentnahmeleitung 52 verbindet den zweiten Gasraum 43 des Kristallisationsbehälters 3 fluidisch mit dem Eingang 54 der Vakuumeinheit 53. Mit der Vakuumeinheit 53 können die Brüden angesaugt und der zum Betrieb des Kristallisationsbehälters 3 gewünschte Unterdruck erzeugt werden.

In der Vakuumeinheit 53 entstehendes Kondensat kann durch eine fluidisch an den ersten Ausgang 55 der Vakuumeinheit 53 angeschlossene erste Vakuumeinheitabführleitung 57 aus der Vakuumeinheit 53 abgeführt werden. Der restliche Stoffstrom kann durch eine an den zweiten Ausgang 56 der Vakuumeinheit 53 fluidisch angeschlossene zweite Vakuumeinheitabführleitung 58 aus der Vakuumeinheit 53 abgeführt werden.

Bei dem mit der Anlage 1 durchgeführten Herstellverfahren wird aus der Suspensionsentnahmeleitung 10 erste Suspension entnommen und in die Reaktionsschleife 26 geleitet. In der vorliegenden Ausführungsform des Herstellverfahrens wird der ersten Suspension in der Cyanwasserstoffzumischeinrichtung 27 eine flüssigen Cyanwasserstoff enthaltende Eduktflüssigkeit zugemischt. Alkalimetallhydroxid der Flüssigphase der ersten Suspension und Cyanwasserstoff der Eduktflüssigkeit werden zu Alkalimetallcyanid und Wasser umgesetzt. Dementsprechend hat die vierte Suspension gegenüber der ersten Suspension einen geringeren Gewichtsanteil an Alkalimetallhydroxid und einen höheren Gewichtsanteil an Alkalimetallcyanid.

Alkalimetallcyanidkristalle bilden sich neu und bereits vorhandene Alkalimetallcyanidkristalle wachsen, wenn in der Flüssigphase die Sättigungsgrenze für Alkalimetallcyanid erreicht ist und in der Flüssigphase weiteres Alkalimetallcyanid nachgebildet wird und/oder der Flüssigphase Wasser entzogen wird, beispielsweise durch Verdampfung. In der vorliegenden Ausführungsform des Herstellverfahrens findet beides statt. In der Reaktionsschleife 26 wird in der Flüssigphase Alkalimetallcyanid gebildet und im Kristallisationsbehälter 3 wird Wasser verdampft. Um das Wasser bei niedrigen Temperaturen verdampfen zu können, wird der Kristallisationsbehälter 3 unter Unterdruck betrieben. Die für das Verdampfen von Wasser erforderliche Wärme stammt zu einem Teil aus der exotherm verlaufenden Umsetzung von Alkalimetallhydroxid und Cyanwasserstoff zu Alkalimetallcyanid und Wasser. Ein weiterer Teil Wärme wird eingebracht, indem die vierte Suspension mit Hilfe des Wärmetauschers 36 weiter erwärmt wird. Der Wärmetauscher 36 fungiert also als Reboiler. Beispielsweise kann der Wärmetauscher 36 die vierte Suspension auf eine Temperatur von etwa 65 °C erwärmen.

Bei dem Verdampfen von Wasser kann es zu einem Zerfall von Alkalimetallcyanid kommen, wobei Cyanwasserstoff frei wird. D. h. im Kristallisationsbehälter 3 können cyanwasserstoffhaltige Brüden entstehen.

Die Brüden durchströmen die Gaswascheinheit 41, in welcher Cyanwasserstoff aus den Brüden ausgewaschen wird. Die nun gereinigten Brüden strömen in den zweiten Gasraum 43 und verlassen den Kristallisationsbehälter 3 durch den Ausgang 51 und werden durch die Brüdenentnahmeleitung 52 abgeführt. Mit der Förderwirkung der Vakuumeinheit 53 - sie saugt die Brüden durch die Brüdenentnahmeleitung 52 aus dem zweiten Gasraum 43 an - wird der gewünschte Betriebsunterdruck im Kristallisationsbehälter 3 aufrechterhalten.

Dem Teil der ersten Suspension, welcher an der Anschlussstelle der Reaktionsschleife 26 vorbei weiter durch die Suspensionsentnahmeleitung 10 fließt, wird in der Laugenzumischeinrichtung 12, also stromab der Anschlussstelle der Reaktionsschleife 26, wässrig gelöstes Alkalimetallhydroxid enthaltende Eduktflüssigkeit zugemischt, deren Gewichtsanteil an Alkalimetallhydroxid höher ist als der der Flüssigphase der ersten Suspension. Dadurch wird die zweite Suspension hergestellt, deren Flüssigphase einen höheren Alkalimetallhydroxidgewichtsanteil hat als die Flüssigphase der ersten Suspension.

Die wässrig gelöstes Alkalimetallhydroxid enthaltende Eduktflüssigkeit wird der Laugenzumischeinrichtung 12 durch die erste Laugenzuführleitung 16 zugeführt.

Die zweite Suspension wird durch die Laugenzumischeinrichtungsabführleitung 17 aus der Laugenzumischeinrichtung 12 abgeführt und in die Fest-Flüssig-Trenneinrichtung 18 eingeleitet. In der Fest-Flüssig-Trenneinrichtung 18 wird im Rahmen des Abtrennens von Festphase der zweiten Suspension die zweite Suspension in ein Alkalimetallcyanid-Feststoffprodukt und eine dritte Suspension aufgetrennt. Die dritte Suspension hat im Vergleich zur zweiten Suspension einen geringeren Gewichtsanteil an Alkalimetallcyanidkristallen.

Das Alkalimetallcyanid-Feststoffprodukt wird durch die erste Trenneinrichtungsabführleitung 22 aus der Fest-Flüssig-Trenneinrichtung 18 abgeführt und die dritte Suspension durch die zweite Trenneinrichtungsabführleitung 23.

Bei der Fest-Flüssig-Trenneinrichtung 18 handelt es sich um eine Art von Fest-Flüssig-Trenneinrichtung, welche die Flüssigphase nicht vollständig von der Festphase trennt. Sie kann beispielsweise als Filter oder Zentrifuge ausgebildet sein. Da die Fest-Flüssig-Trenneinrichtung 18 die Flüssigphase nicht vollständig von der Festphase trennt, hat das Alkalimetallcyanid-Feststoffprodukt auch eine Flüssigphase. Wie hoch deren Gewichtsanteil ist, hängt insbesondere davon ab, mit welcher Effektivität in der Fest-Flüssig-Trenneinrichtung 18 Flüssigphase von Festphase getrennt wird.

Bei dem Alkalimetallcyanid-Feststoffprodukt kann es sich beispielsweise um einen Kristallbrei handeln oder um ein lediglich nasses oder feuchtes Kristallprodukt. Ist ein noch trockeneres Alkalimetallcyanid-Feststoffprodukt gewünscht, kann das aus der Fest-Flüssig-Trenneinrichtung 18 abgeführte Alkalimetallcyanid-Feststoffprodukt einer weiteren Trocknung zugeführt werden.

Dadurch, dass die Flüssigphase der zweiten Suspension einen höheren Gewichtsanteil an Alkalimetallhydroxid hat als die der ersten Suspension, hat das Alkalimetallcyanid-Feststoffprodukt einen höheren Gewichtsanteil an Alkalimetallhydroxid als wenn anstatt der zweiten Suspension erste Suspension in die Fest-Flüssig-Trenneinrichtung 18 eingeleitet worden wäre.

Die dritte Suspension wird durch die zweite Trenneinrichtungsabführleitung 23 in den Kristallisationsbehälter 3 geleitet. Da die Flüssigphase der dritten Suspension einen höheren Gewichtsanteil an Alkalimetallhydroxid hat als die der ersten Suspension, wird durch das Einleiten der dritten Suspension in den Kristallisationsbehälter 3 ein weiterer Teil des in der Reaktionsschleife 26 beim Bilden von Alkalimetallcyanid verbrauchten Alkalimetallhydroxids nachgeführt.

In der Fest-Flüssig-Trenneinrichtung 18 herrscht ein höherer absoluter Betriebsdruck als im Kristallisationsbehälter 3. Der Kristallisationsbehälter 3 wird unter Unterdruck betrieben, wodurch im Kristallisationsbehälter 3 die Siedetemperatur von Wasser abgesenkt ist. Die Druckabfallbegrenzungseinrichtung 25 der zweiten Trenneinrichtungsabführleitung 23 sorgt dafür, dass das Strömen von dritter Suspension von der Fest-Flüssig-Trenneinrichtung 18 in den Kristallisationsbehälter 3 druckneutral für den Betriebsdruck im Kristallisationsbehälter 3 erfolgt.

Bei dem eingesetzten Alkalimetallhydroxid kann es sich beispielsweise um Natriumhydroxid handeln, womit das erhaltene Alkalimetallcyanid-Feststoffprodukt ein Natriumcyanid-Feststoffprodukt wäre, oder um Kaliumhydroxid, womit das erhaltene Alkalimetallcyanid-Feststoffprodukt ein Kaliumcyanid-Feststoffprodukt wäre.

## Patentansprüche

1. Anlage (1) zum Herstellen eines Alkalimetallhydroxid enthaltenden Alkalimetallcyanid-Feststoffproduktes, wobei die Anlage (1) aufweist:
(i) eine Suspensionsherstelleinrichtung (2) zum Herstellen einer ersten Suspension, welche eine Flüssigphase mit wässrig gelöstem Alkalimetallcyanid und wässrig gelöstem Alkalimetallhydroxid enthält sowie eine Festphase mit Alkalimetallcyanidkristallen, wobei die Suspensionsherstelleinrichtung (2) einen Kristallisationsbehälter (3) aufweist, in welchem ein Suspensionssammelraum (5) zum Sammeln erster Suspension vorgesehen ist;
(ii) eine Suspensionsentnahmeleitung (10) zum Abführen erster Suspension aus dem Suspensionssammelraum (5) des Kristallisationsbehälters (3);
(iii) eine Laugenzumischeinrichtung (12) zum Herstellen einer zweiten Suspension, welche eine Flüssigphase mit wässrig gelöstem Alkalimetallcyanid und wässrig gelöstem Alkalimetallhydroxid enthält sowie eine Festphase mit Alkalimetallcyanidkristallen, durch Zumischen einer wässrig gelöstes Alkalimetallhydroxid enthaltenden Eduktflüssigkeit, deren Alkalimetallhydroxidgewichtsanteil höher ist als der Alkalimetallhydroxidgewichtsanteil der Flüssigphase der ersten Suspension, zu der ersten Suspension,
wobei die Suspensionsentnahmeleitung (10) den Suspensionssammelraum (5) des Kristallisationsbehälters (3) der Suspensionsherstelleinrichtung (2) und die Laugenzumischeinrichtung (12) fluidisch miteinander verbindet und durch die Suspensionsentnahmeleitung (10) erste Suspension aus dem Suspensionssammelraum (5) in die Laugenzumischeinrichtung (12) geleitet werden kann;
(iv) eine Laugenzumischeinrichtungsabführleitung (17) zum Abführen zweiter Suspension aus der Laugenzumischeinrichtung (12);
(v) eine Fest-Flüssig-Trenneinrichtung (18), mit welcher die zweite Suspension durch Abtrennen von Festphase der zweiten Suspension in ein Alkalimetallcyanid-Feststoffprodukt und eine dritte Suspension, welche eine Flüssigphase mit wässrig gelöstem Alkalimetallcyanid und wässrig gelöstem Alkalimetallhydroxid enthält sowie eine Festphase mit Alkalimetallcyanidkristallen, getrennt werden kann,
wobei die Laugenzumischeinrichtungsabführleitung (17) die Laugenzumischeinrichtung (12) und die Fest-Flüssig-Trenneinrichtung (18) fluidisch miteinander verbindet und durch die Laugenzumischeinrichtungsabführleitung (17) zweite Suspension aus der Laugenzumischeinrichtung (12) in die Fest-Flüssig-Trenneinrichtung (18) geleitet werden kann;
(vi) eine erste Trenneinrichtungsabführleitung (22) zum Abführen von Alkalimetallcyanid-Feststoffprodukt aus der Fest-Flüssig-Trenneinrichtung (18);
(vii) eine zweite Trenneinrichtungsabführleitung (23) zum Abführen dritter Suspension aus der Fest-Flüssig-Trenneinrichtung (18).

2. Anlage nach Anspruch 1, **dadurch gekennzeichnet, dass** in dem Kristallisationsbehälter (3) Wasser der Flüssigphase der ersten Suspension verdampft werden kann.

3. Anlage nach Anspruch 1 oder 2, **dadurch gekennzeichnet, dass** die zweite Trenneinrichtungsabführleitung (23) die Fest-Flüssig-Trenneinrichtung (18) und den Kristallisationsbehälter (3) der Suspensionsherstelleinrichtung (2) fluidisch miteinander verbindet und durch die zweite Trenneinrichtungsabführleitung (23) dritte Suspension aus der Fest-Flüssig-Trenneinrichtung (18) abgeführt und in den Kristallisationsbehälter (3) geleitet werden kann.

4. Anlage nach Anspruch 3, **dadurch gekennzeichnet, dass** die zweite Trenneinrichtungsabführleitung (23) eine Druckabfallbegrenzungseinrichtung (25) aufweist, welche von dritter Suspension durchströmbar ist und mit welcher ein Betriebsdruckunterschied zwischen der Fest-Flüssigtrenneinrichtung (18) und dem Kristallisationsbehälter (3) der Suspensionsherstelleinrichtung (2) aufrechterhalten werden kann, während die Druckabfallbegrenzungseinrichtung (25) von dritter Suspension durchströmt wird.

5. Anlage nach einem der vorhergehenden Ansprüche, **dadurch gekennzeichnet, dass** eine Reaktionsschleife (26) zum Herstellen einer vierten Suspension, welche eine Flüssigphase mit wässrig gelöstem Alkalimetallcyanid und wässrig gelöstem Alkalimetallhydroxid enthält sowie eine Festphase mit Alkalimetallcyanidkristallen, vorgesehen ist, wobei
• erste Suspension in die Reaktionsschleife (26) eingeleitet werden kann,
• die Reaktionsschleife (26) eine Cyanwasserstoffzumischeinrichtung (27) aufweist, mit welcher durch Zumischen einer flüssigen Cyanwasserstoff enthaltenden Eduktflüssigkeit zur ersten Suspension die vierte Suspension, welche im Vergleich zur ersten Suspension einen geringeren Gewichtsanteil an wässrig gelöstem Alkalimetallhydroxid und einen höheren Gewichtsanteil an Alkalimetallcyanid hat, hergestellt werden kann, und
• vierte Suspension in den Kristallisationsbehälter (3) eingeleitet werden kann.

6. Anlage nach Anspruch 5, **dadurch gekennzeichnet, dass**
• die Reaktionsschleife (26) fluidisch mit der Suspensionsentnahmeleitung (10) verbunden ist, wobei erste Suspension aus der Suspensionsentnahmeleitung (10) abgeführt und in die Reaktionsschleife (26) geleitet werden kann, und
• die Reaktionsschleife (26) fluidisch mit dem Kristallisationsbehälter (3) verbunden ist und vierte Suspension aus der Reaktionsschleife (26) in den Kristallisationsbehälter (3) geleitet werden kann.

7. Anlage nach einem der vorhergehenden Ansprüche, **dadurch gekennzeichnet, dass** eine Laugenzuführleitung (37) vorgesehen ist, welche mit dem Kristallisationsbehälter (3) fluidisch verbunden ist und durch welche eine wässrig gelöstes Alkalimetallhydroxid enthaltenden Eduktflüssigkeit in den Kristallisationsbehälter (3) geleitet werden kann.

8. Anlage nach Anspruch 7, **dadurch gekennzeichnet, dass** die Laugenzumischeinrichtung (12) fluidisch mit der Laugenzuführleitung (37) verbunden ist und wässrig gelöstes Alkalimetallhydroxid enthaltende Eduktflüssigkeit aus der Laugenzuführleitung (37) in die Laugenzumischeinrichtung (12) geleitet werden kann.

9. Verfahren zum Herstellen eines Alkalimetallhydroxid enthaltenden Alkalimetallcyanid-Feststoffproduktes, wobei das Verfahren folgende Schritte aufweist:
(a) Herstellen einer ersten Suspension, welche eine Flüssigphase mit wässrig gelöstem Alkalimetallcyanid und wässrig gelöstem Alkalimetallhydroxid sowie eine Festphase mit Alkalimetallcyanidkristallen enthält, in einer Suspensionsherstelleinrichtung (2);
(b) Abführen von erster Suspension aus einem Kristallisationsbehälter (3) der Suspensionsherstelleinrichtung (2);
(c) Herstellen einer zweiten Suspension, welche eine Flüssigphase mit wässrig gelöstem Alkalimetallcyanid und wässrig gelöstem Alkalimetallhydroxid sowie eine Festphase mit Alkalimetallcyanidkristallen enthält, durch Mischen von aus dem Kristallisationsbehälter (3) abgeführter erster Suspension mit einer wässrig gelöstes Alkalimetallhydroxid enthaltenden Eduktflüssigkeit,
wobei der Alkalimetallhydroxidgewichtsanteil der Eduktflüssigkeit höher ist als der Alkalimetallhydroxidgewichtsanteil der Flüssigphase der ersten Suspension;
(d) Einleiten der zweiten Suspension in eine Fest-Flüssig-Trenneinrichtung (18) und Trennen der zweiten Suspension in ein Alkalimetallcyanid-Feststoffprodukt und eine dritte Suspension, welche eine Flüssigphase mit wässrig gelöstem Alkalimetallcyanid und wässrig gelöstem Alkalimetallhydroxid sowie eine Festphase mit Alkalimetallcyanidkristallen enthält;
(e) Abführen von Alkalimetallcyanid-Feststoffprodukt aus der Fest-Flüssig-Trenneinrichtung (18);
(f) Abführen von dritter Suspension aus der Fest-Flüssig-Trenneinrichtung (18).

10. Verfahren nach Anspruch 9, **dadurch gekennzeichnet, dass** dritte Suspension aus der Fest-Flüssig-Trenneinrichtung (18) in den Kristallisationsbehälter (3) der Suspensionsherstelleinrichtung (2) geleitet wird.

11. Verfahren nach Anspruch 10, **dadurch gekennzeichnet, dass** ein Betriebsdruckunterschied zwischen der Fest-Flüssig-Trenneinrichtung (18) und dem Kristallisationsbehälter (3) aufrechterhalten wird, während dritte Suspension aus der Fest-Flüssig-Trenneinrichtung (18) in den Kristallisationsbehälter (3) geleitet wird.

12. Verfahren nach einem der Ansprüche 9 bis 11, **dadurch gekennzeichnet, dass**
• erste Suspension in eine Reaktionsschleife (26) geleitet wird,
• in der Reaktionsschleife (26) durch Zumischen einer flüssigen Cyanwasserstoff enthaltenden Eduktflüssigkeit zur ersten Suspension eine vierte Suspension hergestellt wird, welche eine Flüssigphase mit wässrig gelöstem Alkalimetallcyanid und wässrig gelöstem Alkalimetallhydroxid enthält sowie eine Festphase mit Alkalimetallcyanidkristallen, wobei die vierte Suspension im Vergleich zur ersten Suspension einen geringeren Gewichtsanteil an wässrig gelöstem Alkalimetallhydroxid und einen höheren Gewichtsanteil an Alkalimetallcyanid hat, und
• die vierte Suspension in den Kristallisationsbehälter (3) geleitet wird.

13. Verfahren nach einem der Ansprüche 9 bis 12, **dadurch gekennzeichnet, dass** durch eine Laugenzuführleitung (37) eine wässrig gelöstes Alkalimetallhydroxid enthaltende Eduktflüssigkeit in den Kristallisationsbehälter (3) geleitet wird.

14. Verfahren nach Anspruch 13, **dadurch gekennzeichnet, dass** wässrig gelöstes Alkalimetallhydroxid enthaltende Eduktflüssigkeit aus der Laugenzuführleitung (37) abgeführt und in Schritt (c) der ersten Suspension zugemischt wird.

## Claims

1. Plant (1) for producing a solid-state alkali metal cyanide product containing alkali metal hydroxide, wherein the plant (1) comprises:
(i) a suspension production unit (2) for producing a first suspension containing a liquid phase with aqueously dissolved alkali metal cyanide and aqueously dissolved alkali metal hydroxide, and a solid phase with alkali metal cyanide crystals, wherein the suspension production unit (2) has a crystallization vessel (3) in which a suspension collection space (5) for collecting first suspension is provided;
(ii) a suspension withdrawal conduit (10) for removing first suspension from the suspension collection space (5) of the crystallization vessel (3);
(iii) an alkali admixing unit (12) for producing a second suspension containing a liquid phase with aqueously dissolved alkali metal cyanide and aqueously dissolved alkali metal hydroxide, and a solid phase with alkali metal cyanide crystals, by mixing into the first suspension a reactant liquid containing aqueously dissolved alkali metal hydroxide, wherein the proportion by weight of alkali metal hydroxide of the reactant liquid is higher than the proportion by weight of alkali metal hydroxide of the liquid phase of the first suspension,
wherein the suspension withdrawal conduit (10) fluidically interconnects the suspension collection space (5) of the crystallization vessel (3) of the suspension production unit (2) and the alkali admixing unit (12), and first suspension can be led from the suspension collection space (5) into the alkali admixing unit (12) through the suspension withdrawal conduit (10);
(iv) an alkali admixing unit removal conduit (17) for removing second suspension from the alkali admixing unit (12);
(v) a solid-liquid separation unit (18) with which the second suspension can be separated by separating solid-phase of the second suspension into a solid-state alkali metal cyanide product and a third suspension containing a liquid phase with aqueously dissolved alkali metal cyanide and aqueously dissolved alkali metal hydroxide, and a solid phase with alkali metal cyanide crystals, wherein the alkali admixing unit removal conduit (17) fluidically interconnects the alkali admixing unit (12) and the solid-liquid separation unit (18), and second suspension can be led from the alkali admixing unit (12) into the solid-liquid separation unit (18) through the alkali admixing unit removal conduit (17);
(vi) a first separation unit removal conduit (22) for removing solid-state alkali metal cyanide product from the solid-liquid separation unit (18);
(vii) a second separation unit removal conduit (23) for removing third suspension from the solid-liquid separation unit (18).

2. Plant according to Claim 1, **characterized in that** water in the liquid phase of the first suspension can be evaporated in the crystallization vessel (3).

3. Plant according to Claim 1 or 2, **characterized in that** the second separation unit removal conduit (23) fluidically interconnects the solid-liquid separation unit (18) and the crystallization vessel (3) of the suspension production unit (2), and third suspension can be removed from the solid-liquid separation unit (18) and led into the crystallization vessel (3) through the second separation unit removal conduit (23).

4. Plant according to Claim 3, **characterized in that** the second separation unit removal conduit (23) has a pressure drop limiting unit (25) through which third suspension can flow and with which an operating pressure difference between the solid-liquid separation unit (18) and the crystallization vessel (3) of the suspension production unit (2) can be maintained while third suspension is flowing through the pressure drop limiting unit (25).

5. Plant according to any of the preceding claims, **characterized in that** a reaction loop (26) for producing a fourth suspension, containing a liquid phase with aqueously dissolved alkali metal cyanide and aqueously dissolved alkali metal hydroxide, and a solid phase with alkali metal cyanide crystals, is provided, wherein
• first suspension can be introduced into the reaction loop (26),
• the reaction loop (26) has a hydrogen cyanide admixing unit (27) with which, by mixing a liquid hydrogen cyanide-containing reactant liquid into the first suspension, the fourth suspension having a lower proportion by weight of aqueously dissolved alkali metal hydroxide and a higher proportion by weight of alkali metal cyanide compared to the first suspension can be produced, and
• fourth suspension can be introduced into the crystallization vessel (3).

6. Plant according to Claim 5, **characterized in that**
• the reaction loop (26) is fluidically connected to the suspension withdrawal conduit (10), wherein first suspension can be removed from the suspension withdrawal conduit (10) and led into the reaction loop (26), and
• the reaction loop (26) is fluidically connected to the crystallization vessel (3), and fourth suspension can be led from the reaction loop (26) into the crystallization vessel (3).

7. Plant according to any of the preceding claims, **characterized in that** an alkali feed conduit (37) is provided, which is fluidically connected to the crystallization vessel (3) and through which a reactant liquid containing aqueously dissolved alkali metal hydroxide can be led into the crystallization vessel (3).

8. Plant according to Claim 7, **characterized in that** the alkali admixing unit (12) is fluidically connected to the alkali feed conduit (37), and reactant liquid containing aqueously dissolved alkali metal hydroxide can be led from the alkali feed conduit (37) into the alkali admixing unit (12).

9. Process for producing a solid-state alkali metal cyanide product containing alkali metal hydroxide, wherein the process comprises the following steps:
(a) producing a first suspension containing a liquid phase with aqueously dissolved alkali metal cyanide and aqueously dissolved alkali metal hydroxide, and a solid phase with alkali metal cyanide crystals, in a suspension production unit (2);
(b) removing first suspension from a crystallization vessel (3) of the suspension production unit (2);
(c) producing a second suspension containing a liquid phase with aqueously dissolved alkali metal cyanide and aqueously dissolved alkali metal hydroxide, and a solid phase with alkali metal cyanide crystals, by mixing first suspension removed from the crystallization vessel (3) with a reactant liquid containing aqueously dissolved alkali metal hydroxide,
wherein the proportion by weight of alkali metal hydroxide of the reactant liquid is higher than the proportion by weight of alkali metal hydroxide of the liquid phase of the first suspension;
(d) introducing the second suspension into a solid-liquid separation unit (18) and separating the second suspension into a solid-state alkali metal cyanide product and a third suspension containing a liquid phase with aqueously dissolved alkali metal cyanide and aqueously dissolved alkali metal hydroxide, and a solid phase with alkali metal cyanide crystals;
(e) removing solid-state alkali metal cyanide product from the solid-liquid separation unit (18);
(f) removing third suspension from the solid-liquid separation unit (18).

10. Process according to Claim 9, **characterized in that** third suspension is led from the solid-liquid separation unit (18) into the crystallization vessel (3) of the suspension production unit (2).

11. Process according to Claim 10, **characterized in that** an operating pressure difference between the solid-liquid separation unit (18) and the crystallization vessel (3) is maintained while third suspension is being led from the solid-liquid separation unit (18) into the crystallization vessel (3).

12. Process according to any of Claims 9 to 11, **characterized in that**
• first suspension is led into a reaction loop (26),
• in the reaction loop (26), a fourth suspension is produced by mixing a liquid hydrogen cyanide-containing reactant liquid into the first suspension and contains a liquid phase with aqueously dissolved alkali metal cyanide and aqueously dissolved alkali metal hydroxide, and a solid phase with alkali metal cyanide crystals, wherein the fourth suspension has a lower proportion by weight of aqueously dissolved alkali metal hydroxide and a higher proportion by weight of alkali metal cyanide compared to the first suspension, and
• the fourth suspension is led into the crystallization vessel (3).

13. Process according to any of Claims 9 to 12, **characterized in that** a reactant liquid containing aqueously dissolved alkali metal hydroxide is led into the crystallization vessel (3) through an alkali feed conduit (37).

14. Process according to Claim 13, **characterized in that** reactant liquid containing aqueously dissolved alkali metal hydroxide is removed from the alkali feed conduit (37) and, in step (c), mixed into the first suspension.

## Revendications

1. Installation (1) pour la préparation d'un produit solide de cyanure de métal alcalin contenant un hydroxyde de métal alcalin, l'installation (1) présentant :
(i) un dispositif de préparation de suspension (2) pour préparer une première suspension qui contient une phase liquide avec du cyanure de métal alcalin dissous en milieu aqueux et de l'hydroxyde de métal alcalin dissous en milieu aqueux ainsi qu'une phase solide avec des cristaux de cyanure de métal alcalin, le dispositif de préparation de suspension (2) présentant une cuve de cristallisation (3) dans laquelle est prévue une chambre de collecte de suspension (5) pour collecter la première suspension ;
(ii) une conduite de prélèvement de suspension (10) pour évacuer la première suspension de la chambre de collecte de suspension (5) de la cuve de cristallisation (3) ;
(iii) un dispositif d'ajout de solution alcaline (12) pour préparer une deuxième suspension qui contient une phase liquide avec du cyanure de métal alcalin dissous en milieu aqueux et de l'hydroxyde de métal alcalin dissous en milieu aqueux, ainsi qu'une phase solide avec des cristaux de cyanure de métal alcalin, par ajout à la première suspension d'un liquide réactif contenant de l'hydroxyde de métal alcalin dissous en milieu aqueux dont la proportion en poids d'hydroxyde de métal alcalin est supérieure à la proportion en poids d'hydroxyde de métal alcalin de la phase liquide de la première suspension,
la conduite de prélèvement de suspension (10) reliant fluidiquement entre elles la chambre de collecte de suspension (5) de la cuve de cristallisation (3) du dispositif de préparation de suspension (2) et le dispositif d'ajout de solution alcaline (12) et la première suspension pouvant être acheminée par la conduite de prélèvement de suspension (10) de la chambre de collecte de suspension (5) jusque dans le dispositif d'ajout de solution alcaline (12) ;
(iv) une conduite d'évacuation (17) du dispositif d'ajout de solution alcaline pour évacuer la deuxième suspension hors du dispositif d'ajout de solution alcaline (12) ;
(v) un dispositif de séparation solide-liquide (18), avec lequel la deuxième suspension peut être séparée par séparation de la phase liquide de la deuxième suspension en un produit solide de cyanure de métal alcalin et une troisième suspension contenant une phase liquide avec du cyanure de métal alcalin dissous en milieu aqueux et de l'hydroxyde de métal alcalin dissous en milieu aqueux ainsi qu'une phase solide avec des cristaux de cyanure de métal alcalin,
la conduite d'évacuation (17) du dispositif d'ajout de solution alcaline reliant fluidiquement entre eux le dispositif d'ajout de solution alcaline (12) et le dispositif de séparation solide-liquide (18) et une deuxième suspension provenant du dispositif d'ajout de solution alcaline (12) pouvant être acheminée par la conduite d'évacuation (17) du dispositif d'ajout de solution alcaline jusque dans le dispositif de séparation solide-liquide (18) ;
(vi) une première conduite d'évacuation (22) du dispositif de séparation pour évacuer le produit solide de cyanure de métal alcalin hors du dispositif de séparation solide-liquide (18) ;
(vii) une deuxième conduite d'évacuation (23) du dispositif de séparation pour évacuer la troisième suspension hors du dispositif de séparation solide-liquide (18).

2. Installation selon la revendication 1, **caractérisée en ce que** l'eau de la phase liquide de la première suspension peut être évaporée dans la cuve de cristallisation (3).

3. Installation selon la revendication 1 ou 2, **caractérisée en ce que** la deuxième conduite d'évacuation du dispositif de séparation (23) relie fluidiquement entre eux le dispositif de séparation solide-liquide (18) et la cuve de cristallisation (3) du dispositif de préparation de suspension (2) et la troisième suspension peut être évacuée du dispositif de séparation solide-liquide (18) par la deuxième conduite d'évacuation (23) du dispositif de séparation et acheminée jusque dans la cuve de cristallisation (3).

4. Installation selon la revendication 3, **caractérisée en ce que** la deuxième conduite d'évacuation (23) du dispositif de séparation présente un dispositif de limitation de chute de pression (25) qui peut être traversé par la troisième suspension et avec lequel une différence de pression de service entre le dispositif de séparation solide-liquide (18) et la cuve de cristallisation (3) du dispositif de préparation de suspension (2) peut être maintenue pendant que le dispositif de limitation de chute de pression (25) est traversé par la troisième suspension.

5. Installation selon l'une quelconque des revendications précédentes, **caractérisée en ce qu'**une boucle de réaction (26) est prévue pour préparer une quatrième suspension qui contient une phase liquide avec du cyanure de métal alcalin dissous en milieu aqueux et de l'hydroxyde de métal alcalin dissous en milieu aqueux, ainsi qu'une phase solide avec des cristaux de cyanure de métal alcalin,
• la première suspension pouvant être introduite dans la boucle de réaction (26),
• la boucle de réaction (26) présentant un dispositif d'ajout d'acide cyanhydrique (27) avec lequel, par ajout d'un liquide réactif contenant de l'acide cyanhydrique liquide à la première suspension, la quatrième suspension peut être préparée, qui, en comparaison de la première suspension, a une proportion en poids plus faible d'hydroxyde de métal alcalin dissous en milieu aqueux et une proportion en poids plus élevée de cyanure de métal alcalin, et
• la quatrième suspension pouvant être introduite dans la cuve de cristallisation (3).

6. Installation selon la revendication 5, **caractérisée en ce que**
• la boucle de réaction (26) est reliée fluidiquement à la conduite de prélèvement de suspension (10), la première suspension pouvant être évacuée de la conduite de prélèvement de suspension (10) et acheminée jusque dans la boucle de réaction (26), et
• la boucle de réaction (26) est reliée fluidiquement à la cuve de cristallisation (3) et la quatrième suspension peut être acheminée de la boucle de réaction (26) jusque dans la cuve de cristallisation (3).

7. Installation selon l'une quelconque des revendications précédentes, **caractérisée en ce qu'**il est prévu une conduite d'amenée de solution alcaline (37) qui est reliée fluidiquement à la cuve de cristallisation (3) et par laquelle un liquide réactif contenant de l'hydroxyde de métal alcalin dissous en milieu aqueux peut être acheminé jusque dans la cuve de cristallisation (3).

8. Installation selon la revendication 7, **caractérisée en ce que** le dispositif d'ajout de solution alcaline (12) est relié fluidiquement à la conduite d'amenée de solution alcaline (37) et le liquide réactif contenant de l'hydroxyde de métal alcalin dissous en milieu aqueux peut être acheminé de la conduite d'amenée de solution alcaline (37) jusque dans le dispositif d'ajout de solution alcaline (12).

9. Procédé de préparation d'un produit solide de cyanure de métal alcalin contenant un hydroxyde de métal alcalin, ledit procédé présentant les étapes suivantes :
(a) la préparation d'une première suspension contenant une phase liquide avec du cyanure de métal alcalin dissous en milieu aqueux et de l'hydroxyde de métal alcalin dissous en milieu aqueux, ainsi qu'une phase solide avec des cristaux de cyanure de métal alcalin, dans un dispositif de préparation de suspension (2) ;
(b) l'évacuation de la première suspension hors d'une cuve de cristallisation (3) du dispositif de préparation de suspension (2) ;
(c) la préparation d'une deuxième suspension contenant une phase liquide avec du cyanure de métal alcalin dissous en milieu aqueux et de l'hydroxyde de métal alcalin dissous en milieu aqueux ainsi qu'une phase solide avec des cristaux de cyanure de métal alcalin, par mélange de la première suspension évacuée de la cuve de cristallisation (3) avec un liquide réactif contenant de l'hydroxyde de métal alcalin dissous en milieu aqueux, la proportion en poids d'hydroxyde de métal alcalin du liquide réactif étant supérieure à la proportion en poids d'hydroxyde de métal alcalin de la phase liquide de la première suspension ;
(d) l'introduction de la deuxième suspension dans un dispositif de séparation solide-liquide (18) et la séparation de la deuxième suspension en un produit solide de cyanure de métal alcalin et une troisième suspension qui contient une phase liquide avec du cyanure de métal alcalin dissous en milieu aqueux et de l'hydroxyde de métal alcalin dissous en milieu aqueux ainsi qu'une phase solide avec des cristaux de cyanure de métal alcalin ;
(e) l'évacuation du produit solide de cyanure de métal alcalin hors du dispositif de séparation solide-liquide (18) ;
(f) l'évacuation de la troisième suspension hors du dispositif de séparation solide-liquide (18).

10. Procédé selon la revendication 9, **caractérisé en ce que** la troisième suspension provenant du dispositif de séparation solide-liquide (18) est acheminée jusque dans la cuve de cristallisation (3) du dispositif de préparation de suspension (2).

11. Procédé selon la revendication 10, **caractérisé en ce qu'**une différence de pression de service entre le dispositif de séparation solide-liquide (18) et la cuve de cristallisation (3) est maintenue pendant qu'une troisième suspension est acheminée du dispositif de séparation solide-liquide (18) jusque dans la cuve de cristallisation (3).

12. Procédé selon l'une quelconque des revendications 9 à 11, **caractérisé en ce que**
• la première suspension est acheminée jusque dans une boucle de réaction (26),
• dans la boucle de réaction (26), par ajout d'un liquide réactif contenant de l'acide cyanhydrique à la première suspension, une quatrième suspension est préparée, qui contient une phase liquide avec du cyanure de métal alcalin dissous en milieu aqueux et de l'hydroxyde de métal alcalin dissous en milieu aqueux, ainsi qu'une phase solide avec des cristaux de cyanure de métal alcalin, la quatrième suspension ayant, par rapport à la première suspension, une proportion en poids plus faible d'hydroxyde de métal alcalin dissous en milieu aqueux et une proportion en poids plus élevée de cyanure de métal alcalin, et
• la quatrième suspension est acheminée jusque dans la cuve de cristallisation (3).

13. Procédé selon l'une quelconque des revendications 9 à 12, **caractérisé en ce qu'**un liquide réactif contenant de l'hydroxyde de métal alcalin dissous en milieu aqueux est acheminé jusque dans la cuve de cristallisation (3) par une conduite d'amenée de solution alcaline (37).

14. Procédé selon la revendication 13, **caractérisé en ce que** le liquide réactif contenant de l'hydroxyde de métal alcalin dissous en milieu aqueux est évacué de la conduite d'amenée de solution alcaline (37) et ajouté à la première suspension à l'étape (c).
